# EUROPEAN PATENT SPECIFICATION

(11) **EP 1 816 798 B1**
(45) Date of publication and mention of the grant of the patent: **01.05.2013**
(21) Application number: 05814786.9
(22) Date of filing: 25.11.2005
(51) Int. Cl.: H04L 12/58, H04L 29/08

(54) **Method and system for providing user state of instant messaging**
Verfahren und System zur Bereitstellung des Benutzerzustands eines sofortigen Nachrichtendienstes
Procédé et système fournissant le mode utilisateur d'une messagerie instantanée

(30) Priority: 26.11.2004 CN 200410052478
(43) Date of publication of application: 08.08.2007
(73) Proprietor: Tencent Technology (Shenzhen) Company Limited, Shenzhen, Guangdon 518044 (CN)
(72) Inventor: MA, Xiaoguang, Shenzhen Guangdong 518044 (CN)
(74) Representative: Körber, Martin Hans
(86) International application number: PCT/CN2005/001993
(87) International publication number: WO 2006/056130

(56) References cited:
- EP-A1- 1 424 820
- WO-A1-02/095630
- WO-A1-03/034672
- WO-A2-01/43357
- JP-A- 2003 233 575
- US-A1- 2003 233 424

## Description

### Field of the Invention

The present invention relates generally to the network communication technology, and more particularly, to a method and system for providing a third party with a state of an instant messaging user.

### Background of the Invention

The Instant Messaging (IM) service is an Internet-based communication service, and is widely applied on the Internet.

The user state is referred to a user state displayed on a web site server of an IM service provider in instant messaging, which generally includes an online state, offline state, invisible state and leaving state. A user may see the state of a contact person via IM client software or obtain the state of a certain user from a web page provided by the IM service provider.

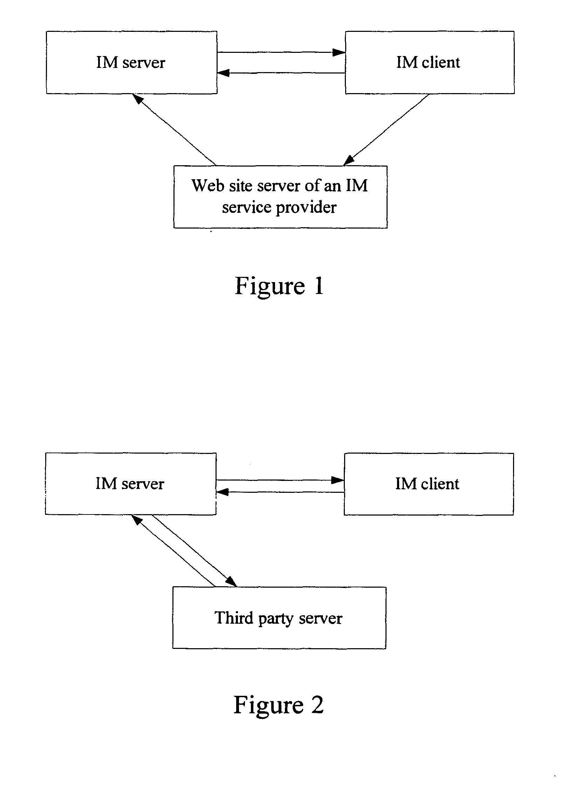

Referring to Figure 1, the principle model of a conventional user state providing system includes an IM server, an IM client and a web site server of an IM service provider. The IM server is a computer device and software for providing an instant messaging service and user state; the IM client performs instant messaging between users and obtains login states of other IM users; the web site server of the IM service provider obtains a user state from the IM server via an internal protocol and displaying the user state on a web page. In the above system, an IM user may conveniently obtain the state of a contact person from its own IM client or obtain the online/offline state of a user from the web site of the IM service provider.

However, in the above system, a third party server which is not an IM service provider is unable to obtain the state of an IM user, and thus cannot provide the IM user with rich personalized state services according to the state of the IM user, additionally, the IM user is unable to add and modify its own personalized state via a third party server.

WO 03/034672 A I discloses a messaging system for provision of instant messaging for a user entity. The user entity of a type that is adapted for communication via a first communication environment based on a first protocol. The messaging system comprises a controller entity for managing instant messaging between user entities in the messaging system. The controller entity is provided in a second communication environment and operates in accordance with a second protocol. The controller entity comprises means for maintaining information regarding the status of said user entity.

WO 01/43357 A2 discloses a more efficient message notification system utilizing technology found in Instant Messaging Services. The more efficient system is achieved by first registering a Message Notification Application with an Instant Messaging Service. A user logs onto the Instant Messaging Service and indicates to the Message Notification Application that user would like to be notified when new message arrives. The Message Notification Application then adds the user to its own buddy list. The user is notified by the Message Notification Application through the Instant Messaging Service when a message is received. The user can then retrieve messages through an internet appliance with sound capabilities, or by utilizing the voice-to-text conversion capabilities of the application form the voice messaging or unified messaging server, or by more traditional methods such as a telephone.

### Summary of the Invention

Embodiments of the present invention provide a method and system for providing a state of an IM user to provide state information of the IM user for a third party.

A system for providing a state of an Instant Messaging (IM) user includes a third party server and an IM server, wherein
the third party server is configured to initiate a state request of an IM user;
the IM server is configured to return the state of the IM user to the third party server upon receiving the state request from the third party server;
wherein the IM server further comprises a memory for storing information and a service providing right of the third party server, the service providing right being a command that the IM server allows the third party server to provide the service; and
the IM server is further configured to return the service providing right to the third party server when returning the state of the IM user to the third party server;
the third party server is further configured to provide a service for an IM client corresponding to the IM user via the IM server, by executing the command returned by the IM server, and sending to the IM client corresponding to the IM user a result of executing the command via the IM server, upon obtaining the state of the IM user and the service providing right returned by the IM server.

The third party server includes at least one of an authorized third party server and an unauthorized third party server;
the IM server is further configured to interact with the authorized third party server via a dedicated interface of a designated protocol or a public interface of a public protocol; the IM server is further configured to interact with the unauthorized third party server via the public interface of the public protocol.

The IM server further includes a memory for storing the state of the IM user;
the memory is a relational database.

A method for providing a state of an IM user applicable to the above mentioned system includes:
initiating, by a third party server, a state request of an IM user;
returning, by an IM server, to the third party server a state of the IM user upon receiving the state request;
wherein the state of the IM user comprises at least one of a state of the IM user in an IM system and a self-defining state of the IM user, and the method further includes:
   providing, by the third party server, a service for the IM user upon receiving the state of the IMuser returned by the IM server;
   returning, by the IM server, a service providing right to the third party server when returning the state of the IM user to the third party server;
   wherein the service providing right returned by the IM server is a command that the IM server allows the third party server to provide the service; and
   providing by the third party server the service for the IM user comprises:
      executing the command returned by the IM server, and sending to an IM client corresponding to the IM user a result of executing the command via the IM server.

The returning the state of the IM user to the third party server includes:
querying all IM user states recorded in the IM server for the state of the IM user, and returning the state of the IM user to the third party server.

The method further includes:
displaying, by the third party server, the state of the IM user on a service platform upon receiving the state of the IM user returned by the IM server.

The command returned by the IM server to the third party server includes:
starting or activating the IM client, jumping a designated web page, and starting a designated programming module or running a designated process module.

The command returned by the IM server to the third party server includes:
returning a state set by the IM user on the third party server to the IM server;
the self-defining state of the IM user includes a state set by the IM user on the third party server and returned by the third party server to the IM server.
The third party server includes an authorized third party server or an unauthorized third party server;
the returning the service providing right to the third party server includes:
   determining an authorization state of the third party server, and returning the service providing right to the third party server according to the authorization state.
   The IM server interacts with the unauthorized third party server via a public interface of a public protocol; the IM server interacts with the authorized third party server via a public interface of a public protocol;
   the determining the authorization state of the third party server includes:
      determining the authorization state of the third party server according to a preset parameter of an interface between the IM server and the third party server or according to authorization information of the third party server stored in the IM server.

The IM server interacts with the unauthorized third party server via a public interface of a public protocol; the IM server interacts with the authorized third party server via a dedicated interface of a designated protocol;
the determining the authorization state of the third party server includes:
determining the authorization state of the third party server according to the type of an interface between the IM server and the third party server.

The determining the authorization state of the third party server according to a preset parameter of an interface includes:
determining the authorization state of the third party server according to an authorization identity in the preset parameter of the interface.

As can be seen from the above technical solution provided by the embodiments of the present invention, the third party server obtains the state of the IM user via the interface for communicating with the IM server, and provides a service for the IM user according to the state of the IM user, for example provides a personalized state service. Since the state of the IM user may be displayed on the service platform of the third party server located on the Internet, the state of the IM user may be seen by more users, which make the state of the IM user have more worth. In addition, the IM user may set a personalized state via the third party server, and display the personalized state on the IM server.

### Brief Description of the Drawings

Figure 1 is a simplified schematic diagram illustrating a conventional system for providing the state of an IM user.
Figure 2 is a simplified schematic diagram illustrating a system for providing the state of an IM user in accordance with an embodiment of the present invention.
Figure 3 is a simplified flowchart illustrating a method for providing the state of an IM user in accordance with an embodiment of the present invention.

### Detailed Description of the Invention

A detailed description of the present invention is hereinafter given with reference to specific embodiments and the accompanying drawings.

The embodiments of the present invention include: after a third party server which is not an IM service provider initiates a state request of an IM user to an IM server, the IM server returning a state of the IM user to the third party server.

The system and method for providing the state of an IM user is hereinafter described with reference to Figure 2 in accordance with the embodiments of the present invention. Referring to Figure 2, the system provided by an embodiment of the present invention includes an IM server, an IM client and a third party server.

The third party in the embodiments of the present invention is relative to the IM service provider and the IM user, i.e., the IM service provider is a first party and the IM user is a second party, and another service provider which is not the IM service provider is called a third party. The third party server includes a server of an authorized third party service provider (called an authorized third party server for short) and a server of an unauthorized third party service provider (called an unauthorized third party server for short). The authorized third party server is authorized by an IM system, while the unauthorized third party server is unauthorized by the IM system. The rights for providing a service for an IM client by the both third party servers are different.

The authorized third party server may communicate with the IM server via a dedicated or public interface, while the unauthorized third party server communicates with the IM server only via a public interface. The protocol used in the dedicated interface is a protocol designated by both the authorized third party server and the IM server, while the protocol used in the public interface is a public protocol. If the third party server communicates with the IM server via the public interface, the IM server may identify the authorization state of the third party server by setting an interface parameter or by authorization information stored in the IM server.

The IM client is the combination of a computer device and software with functions including displaying and setting a user state and executing instant messaging. The IM client sends to the IM server login information and setting information of the user of the IM client via a communication interface. The setting information includes richer states set by the user of the IM client, i.e., various states set by the user, which may be a state provided by the IM system or a state expressed in Chinese characters, for example "I am in Tianjin", "make an examination recently" or "don't trouble me".

The IM server is the combination of a computer device and software for providing and managing an IM service and the state of an IM user. The IM server includes a memory for storing detailed states of an IM user and a corresponding management module, and also includes a memory for storing information and a relative protocol of the authorized or unauthorized third party service provider and a corresponding management module. The IM server has an interface and a corresponding program module for communicating with the above authorized or unauthorized third party server. As a result, the IM server may communicate with the third party server.

The memory for storing the detailed states of an IM user is a relational database storing states of all IM users in practical applications. An example of the database is as shown in the following table.

| User name | Age | State | Rich States | Sex |
|---|---|---|---|---|
| San Zhang | 23 | Online | on a business trip in Nanjing | Male |
| Er Sun | 32 | Offline | in bad mood now | Female |

In the above table, the State is referred to a state provided by the IM system to the IM user, and the Rich States is referred to self-defining rich states of the IM user. The IM user may set the self-defining rich states in the IM system or a service platform of the third party server.

In the above relational database, a Structured Query Language (SQL) is used as an interface program for managing database contents, which may update the database contents according to the setting information of the user of IM client.

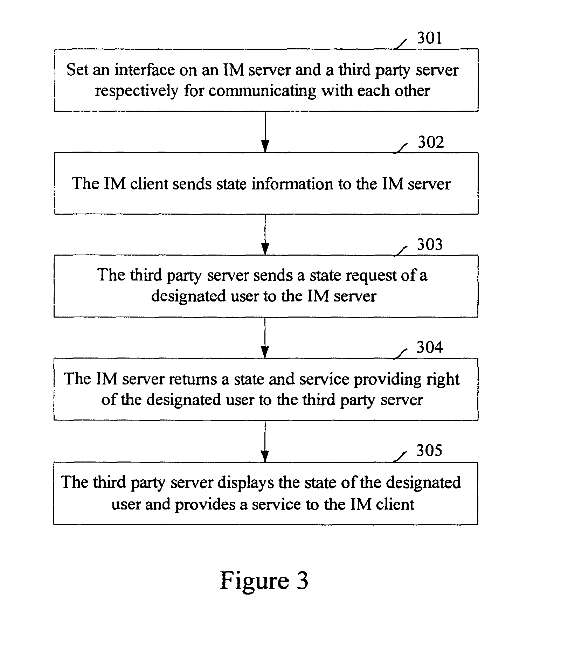

The method for providing the state of an IM user is hereinafter described with reference to Figure 2 and Figure 3 in accordance with an embodiment of the present invention. The method provided by an embodiment of the present invention is based on the system described in Figure 2 and includes the following steps as shown in Figure 3.

Step 301: Set an interface on an IM server and a third party server respectively in advance to communicate with each other. As the above mentioned, the interface for the IM server communicating with the authorized third party server is a dedicated or public interface while the interface for the IM server communicating with the unauthorized third party server is a public interface. If the IM server communicates with a third party server via the public interface, the IM server may identify the authorization state of the third party server by setting an interface parameter, for example adding an authorization identity in the interface parameter.

Step 302: The IM client sends login information and login state setting information to the IM server when logging in the IM system. Generally, the IM user logs in the IM system with an online state; alternatively, the IM user may also log in the IM system with an invisible state. The IM server receives the login information or the login state setting information, and saves the state of the IM user in the relational database. After logging in the IM system, the IM user may set his/her state as online, invisible, leaving or offline. Whenever setting the state, the IM client sends new state information to the IM server. After receiving the new state information, the IM server saves the new state information in the relational database. The IM user may set self-defining rich states, for example "I'm in Tianjin", in the IM system or by the third party server. If the rich states are set by the third party server, the third party server sends new state information to the IM server after setting the rich states every time, and the IM server keeps the rich states sent by the third party server last time after the IM client quits the IM server.

Step 303: The third party server sends a state request of the IM user, which includes at least a unique identity of the IM user in the IM system, to the IM server.

Step 304: After receiving the state request from the third party server, the IM server queries the relational database for the state of the IM user corresponding to the unique identity, and returns to the third party server the found the state of the IM user. The state of the IM user may be a state of the IM user being in the IM system, e.g., an online or offline state, or a rich state set by the IM user, for example "don't trouble me".

At the same time, the IM server determines the authorization state of the third party server. If the authorized third party server is preset to interact with the IM server only via a dedicated interface, the IM server may determine the authorization state of the third party server by the type of the interface for exchanging data; if the authorized third party server is preset to interact with the IM server via a public interface, the IM server may determine the authorization state of the third party server by the authorization identity in the interface parameter or by authorization information stored by itself. After the authorization state of the third party server is determined, the IM server returns different service providing rights to the third party server according to the authorization state. If the third party server is authorized by the IM system, the service providing right is relatively high, for example including popping up a designated web page, starting and executing a designated programming module. If the third party server is unauthorized by the IM system, the service providing right is relatively low, for example only including popping up a designated web page. The service providing right returned by the IM server to the third party server may be a command for the IM server allowing the third party server to provide a service so as to be executed by the third party server.

Step 305: The third party server displays the state of the IM user on its own service platform according to the returned state of the IM user in an image mode or by a designated value. At the same time, the third party server provides a service for the IM client according to the received service providing right, i.e., execute the command for allowing the third party server to provide a service returned by the IM server. For example, the state of the IM user on the service platform of the third party server may be returned to the IM server and added in the relational database, i.e., the personalized state of the IM user is added; alternatively, when the IM user is online, other users may leave a message to the IM client by the service platform of the third party server, and the message is sent to the IM client by the IM server.

The command which the IM server allows the third party server to execute further includes: starting or activating the IM client, jumping a designated web page, and starting a designated programming module or running a designated process module. After the command is executed, the third party server returns a command execution result to the IM client. After receiving the command execution result sent by the third party server, the IM client may execute a certain action, e.g., self-starting or activating a certain function.

In accordance with the above system and method, the third party server may obtain the state of the IM user and provide a service for the IM user according to the state of the IM user. The IM user may not only obtain the state of a contact person by the IM system, but also obtain the states of other IM users by the third party server. In addition, the IM user may add and modify its own personalized states by the third party server.

The embodiments of the present invention may be modified appropriately during specific implementation to meet the detailed requirements of specific cases. It is thereby understood that the specific embodiments described in this disclosure are demonstrative rather than limiting the protection scope of the present invention.

## Claims

1. A system for providing a state of an Instant Messaging, IM, user, comprising a third party server and an IM server, wherein
the third party server is configured to initiate a state request of an IM user;
the IM server is configured to return the state of the IM user to the third party server upon receiving the state request from the third party server;
the system being **characterised in that**
the IM server further comprises a memory for storing information and a service providing right of the third party server, the service providing right being a command that the IM server allows the third party server to provide the service; and
the IM server is further configured to return the service providing right to the third party server when returning the state of the IM user to the third party server;
the third party server is further configured to provide a service for an IM client corresponding to the IM user via the IM server, by executing the command returned by the IM server, and sending to the IM client corresponding to the IM user a result of executing the command via the IM server, upon obtaining the state of the IM user and the service providing right returned by the IM server.

2. The system of Claim 1, wherein the third party server comprises at least one of an authorized third party server and an unauthorized third party server;
the IM server is further configured to interact with the authorized third party server via a dedicated interface of a designated protocol or a public interface of a public protocol; the IM server is further configured to interact with the unauthorized third party server via the public interface of the public protocol.

3. The system of Claim 1, wherein the IM server further comprises a memory for storing the state of the IM user;
the memory is a relational database.

4. A method for providing a state of an Instant Messaging, IM, user applicable to the system of Claim 1, comprising:
initiating, by a third party server, a state request of an IM user (303);
returning, by an IM server, to the third party server a state of the IM user upon receiving the state request (304);
the method being **characterised in that** the state of the IM user comprises at least one of a state of the IM user in an IM system and a self-defining state of the IM user, and the method further comprises:
providing, by the third party server, a service for the IM user upon receiving the state of the IM user returned by the IM server;
returning, by the IM server, a service providing right to the third party server when returning the state of the IM user to the third party server;
wherein the service providing right returned by the IM server is a command that the IM server allows the third party server to provide the service; and
providing by the third party server the service for the IM user comprises:
executing the command returned by the IM server, and sending to an IM client corresponding to the IM user a result of executing the command via the IM server.

5. The method of Claim 4, wherein the returning the state of the IM user to the third party server (304) comprises:
querying all IM user states recorded in the IM server for the state of the IM user, and returning the state of the IM user to the third party server.

6. The method of Claim 4, further comprising:
displaying, by the third party server, the state of the IM user on a service platform upon receiving the state of the IM user returned by the IM server.

7. The method of Claim 4, wherein the command returned by the IM server to the third party server comprises:
starting or activating the IM client, jumping a designated web page, and starting a designated programming module or running a designated process module.

8. The method of Claim 4, wherein the command returned by the IM server to the third party server comprises:
returning a state set by the IM user on the third party server to the IM server;
the self-defining state of the IM user comprises a state set by the IM user on the third party server and returned by the third party server to the IM server.

9. The method of Claim 4, wherein the third party server comprises an authorized third party server or an unauthorized third party server;
the returning the service providing right to the third party server comprises:
determining an authorization state of the third party server, and returning the service providing right to the third party server according to the authorization state.

10. The method of Claim 9, wherein the IM server interacts with the unauthorized third party server via a public interface of a public protocol; the IM server interacts with the authorized third party server via a public interface of a public protocol;
the determining the authorization state of the third party server comprises:
determining the authorization state of the third party server according to a preset parameter of an interface between the IM server and the third party server or according to authorization information of the third party server stored in the IM server.

11. The method of Claim 9, wherein the IM server interacts with the unauthorized third party server via a public interface of a public protocol; the IM server interacts with the authorized third party server via a dedicated interface of a designated protocol;
the determining the authorization state of the third party server comprises:
determining the authorization state of the third party server according to the type of an interface between the IM server and the third party server.

12. The method of Claim 10, wherein the determining the authorization state of the third party server according to a preset parameter of an interface comprises:
determining the authorization state of the third party server according to an authorization identity in the preset parameter of the interface.

## Patentansprüche

1. System zum Bereitstellen eines Status eines Anwenders von Sofort-Nachrichtenübermittlung (IM-Anwender), das einen Drittpartei-Server und einen IM-Server umfasst, wobei
der Drittpartei-Server konfiguriert ist, eine Status-Anforderung eines IM-Anwenders zu initialisieren;
der IM-Server konfiguriert ist, den Status des IM-Anwenders an den Drittpartei-Server beim Empfang der Status-Anforderung vom Drittpartei-Server zurückzuschicken,
wobei das System **dadurch gekennzeichnet ist, dass**
der IM-Server außerdem einen Speicher zum Speichern von Information umfasst, und einen Dienst, der Berechtigung des Drittpartei-Servers bereitstellt, wobei der Dienst Berechtigung bereitstellt, die ein Befehl ist, dass der IM-Server es dem Drittpartei-Server erlaubt, den Dienst bereitzustellen; und
der IM-Server außerdem konfiguriert ist, den Dienst, der Berechtigung bereitstellt, zum Drittpartei-Server zurückzuschicken, wenn der Status des IM-Anwenders zum Drittpartei-Server zurückgeschickt wird;
der Drittpartei-Server außerdem konfiguriert ist, einen Dienst für einen IM-Client, der dem IM-Anwender entspricht, über den IM-Server bereitzustellen, indem der Befehl, der durch den IM-Server zurückgeschickt wird, ausgeführt wird, und zum IM-Client entsprechend dem IM-Anwender ein Ergebnis, den Befehl auszuführen, über den IM-Server beim Erlangen des Status des IM-Anwenders und des Dienstes, der Berechtigung bereitstellt, die durch den IM-Servers zurückgeschickt wird, zu senden.

2. System nach Anspruch 1, wobei der Drittpartei-Server zumindest eines von einem autorisierten Drittpartei-Server und einem nicht-autorisierten Drittpartei-Server umfasst;
der IM-Server außerdem autorisiert ist, mit dem Drittpartei-Server über eine gewidmete Schnittstelle eines bestimmten Protokolls oder eine öffentliche Schnittstelle eines öffentlichen Protokolls zusammenzuwirken; der IM-Server außerdem konfiguriert ist, mit dem nichtautorisierten Drittpartei-Server über die öffentliche Schnittstell des öffentlichen Protokolls zusammenzuwirken.

3. System nach Anspruch 1, wobei der IM-Server außerdem einen Speicher umfasst, um den Status des IM-Anwenders zu speichern;
der Speicher eine relationale Datenbank ist.

4. Verfahren zum Bereitstellen eines Status eines Anwenders von Sofort-Nachrichtenübermittlung (IM-Anwender), das bei einen System nach Anspruch 1 anwendbar ist, welches umfasst:
Initialisieren einer Status-Anforderung eines IM-Anwenders (303) durch einen Drittpartei-Server;
Zurückschicken eines Status des IM-Anwenders durch einen IM-Server zum Drittpartei-Server beim Empfangen des Status-Anforderung (304);
wobei das Verfahren **dadurch gekennzeichnet ist, dass**
der Status des IM-Anwenders zumindest eines von einem Status des IM-Anwenders in einem IM-System und einem selbst-definierenden Status des IM-Anwenders umfasst, und das Verfahren außerdem umfasst:
Bereitstellen - durch den Drittpartei-Server - eines Diensts für den IM-Anwender beim Empfang des Status des IM-Anwenders, der durch den IM-Server zurückgeschickt wird;
Zurückschicken - durch den IM-Server - eines Diensts, der Berechtigung dem Drittpartei-Server bereitstellt, wenn der Status des IM-Anwenders zum Drittpartei-Server zurückgeschickt wird;
wobei der Dienst, der Berechtigung, die durch den IM-Server zurückgeschickt wird, bereitstellt, ein Befehl ist, dass der IM-Server es dem Drittpartei-Server erlaubt, den Dienst bereitzustellen, und
Bereitstellen durch den Drittpartei-Server des Diensts für den IM-Anwender umfasst:
Ausführen des Befehls, der durch den IM-Server zurückgeschickt wird, und Senden - zu einem IM-Client entsprechend dem IM-Anwender - eines Befehls zum Ausführen des Befehls über den IM-Server.

5. Verfahren nach Anspruch 4, wobei das Zurückschicken des Status des IM-Anwenders zum Drittpartei-Server (304) umfasst:
Abfragen aller IM-Anwender-Stati, die im IM-Server aufgezeichnet sind, in Hinblick auf den Status des IM-Anwenders und Zurückschicken des Status der IM-Anwenders zum Drittpartei-Server.

6. Verfahren nach Anspruch 4, das außerdem umfasst:
Anzeigen - durch den Drittpartei-Server - des Status des IM-Anwenders auf einer Dienstplattform beim Empfang des Status des IM-Anwenders, der durch den IM-Server zurückgeschickt wird.

7. Verfahren nach Anspruch 4, wobei der Befehl, der durch den IM-Server zum Drittpartei-Server zurückgeschickt wird, umfasst:
Starten oder Aktivieren des IM-Client, Springen auf eine bestimmte Web-Seite, und Starten eines bestimmten Programm-Moduls und Ablaufen-Lassen eines bestimmten Prozess-Moduls.

8. Verfahren nach Anspruch 4, wobei der Befehl, der durch den IM-Server zum Drittpartei-Server zurückgeschickt wird, umfasst:
Zurückschicken eines Status, der durch den IM-Anwender auf dem Drittpartei-Server eingestellt ist, zum IM-Server;
wobei der selbst-definierende Staus des IM-Anwenders einen Staus umfasst, der durch den IM-Anwender auf dem Drittpartei-Server eingestellt ist und der durch den Drittpartei-Server zum IM-Server zurückgeschickt wurde.

9. Verfahren nach Anspruch 8, wobei der Drittpartei-Server einen autorisierten Drittpartei-Server und einen nicht-autorisierten Drittpartei-Server umfasst;
wobei das Zurückschicken des Diensts, der Berechtigung dem Drittpartei-Server bereitstellt, umfasst:
Bestimmen eines Autorisierungs-Status des Drittpartei-Servers und Zurückschicken des Diensts, der Berechtigung bereitstellt, zum Drittpartei-Server gemäß dem Autorisierungs-Status.

10. Verfahren nach Anspruch 9, wobei der IM-Server mit dem nicht-autorisierten Drittpartei-Server über eine öffentliche Schnittstelle eines öffentlichen Protokolls zusammenwirkt; der IM-Server mit dem autorisierten Drittpartei-Server über eine öffentliche Schnittstelle eines öffentlichen Protokolls zusammenwirkt;
das Bestimmen des Autorisierung-Status des Drittpartei-Servers umfasst:
Bestimmen des Autorisierungs-Status des Drittpartei-Servers gemäß einem voreingestellten Parameter einer Schnittstelle zwischen dem IM-Server und dem Drittpartei-Server oder gemäß einer Autorisierungsinformation des Drittpartei-Servers, der im IM-Server gespeichert ist.

11. Verfahren nach Anspruch 9, wobei der IM-Server mit dem nicht-autorisierten Drittpartei-Server über eine öffentliche Schnittstelle eines öffentlichen Protokolls zusammenwirkt, der IM-Server mit dem autorisierten Drittpartei-Server über eine bestimmte Schnittstelle eines bezeichneten Protokolls zusammenwirkt;
das Bestimmen des Autorisierungs-Status des Drittpartei-Servers umfasst:
Bestimmen des Autorisierungs-Status des Drittpartei-Servers gemäß der Art einer Schnittstelle zwischen dem IM-Server und dem Drittpartei-Server.

12. Verfahren nach Anspruch 10, wobei das Bestimmen des Autorisierungs-Status des Drittpartei-Servers gemäß einem voreingestellten Parameter einer Schnittstelle umfasst:
Bestimmen des Autorisierungs-Status des Drittpartei-Servers gemäß einer Autorisierungs-Identität im voreingestellten Parameter der Schnittstelle.

## Revendications

1. Système pour fournir un mode utilisateur d'une messagerie instantanée (IM), comprenant un serveur de tiers et un serveur IM, dans lequel
le serveur de tiers est configuré pour initier une requête d'état d'un utilisateur de la IM ;
le serveur IM est configuré pour retourner l'état de l'utilisateur de la IM au serveur de tiers lors de la réception de la requête d'état du serveur de tiers ;
le système étant **caractérisé en ce que** le serveur de la IM comprend en outre une mémoire pour stocker des informations et un service d'autorisation du serveur de tiers, le service d'autorisation étant une instruction que le serveur de la IM permet au serveur de tiers de fournir le service ; et
le serveur de la IM est en outre configuré pour ramener le service d'autorisation au serveur de tiers lors du retour de l'état de l'utilisateur de la IM au serveur de tiers ;
le serveur de tiers est en outre configuré pour fournir un service à un client de la IM correspondant à l'utilisateur de la IM par le serveur de la IM, en exécutant l'instruction retournée par le serveur de la IM, et pour envoyer au client de la IM correspondant à l'utilisateur de la IM un résultat de l'exécution de l'instruction par le serveur de la IM, lors de l'obtention de l'état de l'utilisateur de la IM et du service d'autorisation retourné par le serveur de la IM.

2. Système selon la revendication 1, dans lequel le serveur de tiers comprend au moins un d'un serveur de tiers autorisé et d'un serveur de tiers non autorisé ;
le serveur de la IM est en outre configuré pour l'interaction avec le serveur de tiers autorisé par une interface dédiée d'un protocole désigné ou une interface publique d'un protocole public ; le serveur de la IM est en outre configuré pour l'interaction avec le serveur de tiers non autorisé par l'interface publique du protocole publique.

3. Système selon la revendication 1, dans lequel le serveur de la IM comprend en outre une mémoire pour stocker l'état de l'utilisateur de la IM ;
la mémoire est une base de données relationnelle.

4. Procédé pour fournir un mode utilisateur d'une messagerie instantanée IM applicable au système de la revendication 1, comprenant :
initier, par un serveur de tiers, une requête d'état d'un utilisateur de la IM (303) ;
retourner, par un serveur de la IM, au serveur de tiers un état de l'utilisateur de la IM après avoir reçu la requête d'état (304) ;
le procédé étant **caractérisé en ce que** l'état de l'utilisateur de la IM comprend au moins un d'un état de l'utilisateur de la IM dans un système de la IM et un état d'autodéfinition de l'utilisateur de la IM, et le procédé comprend en outre :
fournir, par le serveur du tiers, un service à l'utilisateur de la IM lors de la réception de l'état de l'utilisateur de la IM retourné par le serveur de la IM ;
retourner, par le serveur de la IM, un service d'autorisation au serveur de tiers lors du retour de l'état de l'utilisateur de la IM au serveur de tiers ;
où le service d'autorisation retourné par le serveur IM est une instruction que le serveur de la IM permet au serveur de tiers de fournir le service ; et
la fourniture, par le serveur de tiers, du service à l'utilisateur de la IM comprend :
exécuter l'instruction retournée par le serveur de la IM, et envoyer à un client de la IM correspondant à l'utilisateur de la IM un résultat d'exécution de l'instruction par le serveur de la IM.

5. Procédé selon la revendication 4, dans lequel le retour de l'état de l'utilisateur de la IM au serveur de tiers (304) comprend :
demander tous les états de l'utilisateur de la IM enregistrés dans le serveur de la IM pour l'état de l'utilisateur de la IM, et retourner l'état de l'utilisateur de la IM au serveur de tiers.

6. Procédé selon la revendication 4, comprenant en outre :
afficher, par le serveur de tiers, l'état de l'utilisateur de la IM sur une plateforme de service lors de la réception de l'état de l'utilisateur de la IM retourné par le serveur de la IM.

7. Procédé selon la revendication 4, dans lequel l'instruction retournée par le serveur de la IM au serveur de tiers comprend :
commencer ou activer le client de la IM, sauter une page web désignée et commencer un module de programmation désigné ou exécuter un module de processus désigné.

8. Procédé selon la revendication 4, dans lequel l'instruction retournée par le serveur de la IM au serveur de tiers comprend :
retourner un état établi par l'utilisateur de la IM sur le serveur de tiers au serveur de la IM ;
l'état d'autodéfinition de l'utilisateur de la IM comprend un état établi par l'utilisateur de la IM sur le serveur de tiers et retourné par le serveur de tiers au serveur de la IM.

9. Procédé selon la revendication 4, dans lequel le serveur de tiers comprend un serveur de tiers autorisé et un serveur de tiers non autorisé ;
le retour du service d'autorisation au serveur de tiers comprend :
déterminer un état d'autorisation du serveur de tiers, et retourner le service d'autorisation au serveur de tiers en accord avec l'état d'autorisation.

10. Procédé selon la revendication 9, dans lequel le serveur de la IM est en interaction avec le serveur de tiers non autorisé par une interface publique d'un protocole publique ; le serveur de la IM est en interaction avec le serveur de tiers autorisé par une interface publique d'un protocole publique ;
la détermination de l'état d'autorisation du serveur de tiers comprend :
déterminer l'état d'autorisation du serveur de tiers en accord avec un paramètre préréglé d'une interface entre le serveur de la IM et le serveur de tiers ou bien en accord avec l'information d'autorisation du serveur de tiers stockée dans le serveur de la IM.

11. Procédé selon la revendication 9, dans lequel le serveur de la IM est en interaction avec le serveur de tiers non autorisé par une interface publique d'un protocole publique ; le serveur de la IM est en interaction avec le serveur de tiers autorisé par une interface dédie d'un protocole désigné ;
la détermination de l'état d'autorisation du serveur de tiers comprend :
déterminer l'état d'autorisation du serveur de tiers en accord avec le type d'interface entre le serveur de la IM et le serveur de tiers.

12. Procédé selon la revendication 10, dans lequel la détermination de l'état d'autorisation du serveur de tiers en accord avec un paramètre préréglé d'une interface comprend :
déterminer l'état d'autorisation du serveur de tiers en accord avec une identité d'autorisation dans le paramètre préréglé de l'interface.
